# EUROPÄISCHE PATENTSCHRIFT

(11) **EP 3 744 998 B1**
(45) Veröffentlichungstag und Bekanntmachung des Hinweises auf die Patenterteilung: **28.07.2021**
(21) Anmeldenummer: 20173001.7
(22) Anmeldetag: 05.05.2020
(51) Int. Cl.: F16H 37/06, B60J 7/06, F16H 3/00

(54) **ELEKTRISCHE ANTRIEBSVORRICHTUNG FÜR EIN BEWEGLICHES FAHRZEUGTEIL**
ELECTRIC DRIVING DEVICE FOR A MOVABLE VEHICLE PART
DISPOSITIF D'ENTRAÎNEMENT ÉLECTRIQUE POUR UNE PIÈCE DE VÉHICULE MOBILE

(30) Priorität: 20.05.2019 DE 102019207372; 06.04.2020 DE 102020204441
(43) Veröffentlichungstag der Anmeldung: 02.12.2020
(73) Patentinhaber: Magna Car Top Systems GmbH, 74321 Bietigheim-Bissingen (DE)
(72) Erfinder: KOBER, Tobias, 71672 Marbach (DE); ROSOK, Urs-Patrick, 71638 Ludwigsburg (DE)
(74) Vertreter: Rausch, Gabriele

(56) Entgegenhaltungen:
- DE-A1- 19 731 341
- DE-A1-102016 221 176
- TW-A- 201 319 431

## Beschreibung

Die vorliegende Erfindung betrifft eine elektrische Antriebsvorrichtung für ein bewegliches Fahrzeugteil mit einem Elektromotor und einem Planetengetriebe in einem Gehäuse, wobei der Eintrieb in das Sonnenrad des Planetengetriebes erfolgt, wobei die erste Abtriebswelle mit einem ersten Element des Planetengetriebes verbunden ist.

### Stand der Technik

Faltverdecke für Cabriolet-Fahrzeuge sind in unterschiedlichen Ausführungsvarianten bekannt und verschließen in der Regel eine entlang des Fahrzeugdaches bis in den Heckbereich ragende Dachöffnung. Hierbei ist das Faltverdeck mittels eines Verdeckgestänges derart zwischen einer Offenstellung und einer Schließstellung bewegbar ausgeführt, dass das Faltverdeck in der Offenstellung in einem heckseitigen Stauraum abgelegt ist. Das Faltverdeck umfasst ein Verdeckgestänge mit einer Vielzahl von Lenkern, Spriegeln und Bügeln. Ein Verdeckbezug wird von dem Verdeckgestänge getragen, der in der geschlossenen Position den Fahrzeuginnenraum überspannt. Das Verdeckgestänge umfasst auch einen Spannbügel, an dem der Verdeckbezug am unteren Endbereich heckseitig fixiert ist und der den Verdeckbezug in der Schließstellung unter Spannung setzt. Der Spannbügel ist an einer Spannbügelkinematik gehalten und über diese zwischen seiner Funktions-Spannposition, die der Schließposition des Faltverdecks entspricht, und einer Ablageposition verstellbar. In der Ablageposition des Spannbügels befindet sich das Faltverdeck in der Offenstellung.

Zu Beginn der Ablagebewegung kann der Spannbügel von seiner Spannposition in eine Lösestellung bewegt werden. In dieser Lösestellung ist der Spannbügel so weit angehoben, dass die Spannung des Verdeckbezugs aufgehoben ist und eine auf dem heckseitigen Ablageraum aufliegende Heckklappe angehoben werden kann. Zur Sicherung des Spannbügels in der Spannposition dient ein Sturmgestänge, über das der Spannbügel bei geschlossenem Faltverdeck an einem Bauteil des Verdeckgestänges abgestützt ist.

Die Verstellung des Spannbügels zwischen Spannposition und Ablageposition kann über die Spannbügelkinematik erfolgen als gekoppelte Bewegung der Bewegung des Faltdaches. In diesem Fall ist die Spannbügelkinematik mit der Dachkinematik gekoppelt. Bei einer Bewegung der Dachkinematik führt der Spannbügel ebenfalls eine Verstellbewegung aus. Über die Spannbügelkinematik ist der Spannbügel einerseits an die Fahrzeugkarosserie und andererseits an die Dachkinematik angebunden.

Allerdings ist auch eine unabhängige Bewegung des Spannbügels und der Dachkinematik möglich.

In der Automobilindustrie gibt es einen Trend, mehr und mehr elektrische Antriebssysteme für bewegliche Teile der Fahrzeuge zu verwenden. Im Fall von Dachanordnungen für Fahrzeuge ist dieser Trend ebenfalls sichtbar wobei mehrteilige Fahrzeugdachelemente, Sonnenblenden und / oder Rollos, Faltverdecke elektrisch angetrieben werden.

Aus der EP 0 749 859 A1 ist ein Faltverdeck für ein Cabriolet-Fahrzeug bekannt, das ein Verdeckgestänge mit einem Hauptantrieb aufweist. Des Weiteren ist eine Spannbügelkinematik vorgesehen, die eine obere, eine untere Sturmstange und einen Spannbügel umfasst. Der Spannbügelkinematik ist ein separates Antriebsorgan zugeordnet, wobei das Antriebsorgan karosserieseitig gelagert und als Hydraulikzylinder ausgeführt ist. Eine Antriebsbewegung des Hydraulikzylinders wird hierbei über einen am Hauptlager des Verdeckgestänges schwenkbeweglich gelagerten Schwinghebel erreicht, der über einen Kniehebel mit einem Spannhebel derart verbunden ist, dass mit diesem die obere Sturmstange entsprechend der Bewegung des Antriebskolbens zur Dachhaut hin bzw. von dieser weg bewegt werden kann. Die untere Sturmstange ist dabei derart am Spannbügel gelagert und die vordere Sturmstange am Verdeckgestänge, dass die Spannbügelkinematik unabhängig vom Hauptantrieb bewegbar ist. Nachteilig bei dieser bekannten Ausführungsform der Dachkinematik ist allerdings, dass der der Spannbügelkinematik zugeordnete Hydraulikzylinder während der Verstellbewegung des Fahrzeugdaches drucklos geschaltet werden muss. Des Weiteren ist der Bewegungsablauf beim Öffnen und Schließen des Fahrzeugdaches kinematisch unbestimmt.

EP 1 588 882 A1 offenbart eine Antriebseinheit mit einem Elektromotor, der mit einem Planetengetriebemechanismus in Eingriff steht, der zwei oder mehr Ausgangswellen aufweist, um verschiedene Teile durch denselben Elektromotor anzutreiben.

EP 2 098 396 A1 zeigt eine Antriebseinheit, die zwei Hauptbaugruppen umfasst, das heißt einen Elektromotor, der eine erste Übertragungseinrichtung mit einer Antriebswelle enthält, und eine zweite Baugruppe mit einem Getriebe mit einer zweiten Übertragungseinrichtung, die dafür ausgelegt ist mit der Antriebswelle des ersten Getriebemittels verbunden zu werden. Dabei dient ein Planetengetriebe als Abtriebselement, wobei zwei betätigbare Sperren entweder ein mit dem Planetenträger verbundendes Zahnrad oder das Sonnenrad sperren, um zwei Abtriebe darzustellen.

Die DE 35 45 869 A1 zeigt eine Antriebsvorichtung für ein Fahrzeugdach mit einem Verteilergetriebe. Dieses weist eine Eingangswelle und mindestens zwei Ausgangswellen auf, die je nach Schaltstellung des Verteilergetriebes über Getriebeelemente mit unterschiedlichen Übersetzungen getrennt oder gemeinsam antreibbar sind.

DE 197 31 341 A1 zeigt einen Antrieb für zwei gegeneinander bewegliche Fahrzeugteile. Der Antrieb umfasst dabei einen Elektromotor und ein Planetengetriebe mit doppeltem Planetensatz, wobei die Abtriebsritzel mit den Planetenträgern verbunden sind. Am Umfang der Planetenträger sind Sperrklinken angebracht, die jeweils in ein Planetenträgerrad eingreifen können, um entweder den ersten oder den zweiten Teilbereich des Planetengetriebes festzulegen.

### Beschreibung der Erfindung

Aufgabe der vorliegenden Erfindung ist es eine elektrischen Antriebsvorrichtung eines beweglichen Fahrzeugteils mit zwei Abtriebsvorrichtungen für den Einsatz in einem Cabriolet oder einem Fahrzeug mit Schiebedach in einer vereinfachten, platzreduzierenden Bauform zur Verfügung zu stellen.

Die Aufgabe wird gelöst mit einer elektrischen Antriebsvorrichtung eines beweglichen Fahrzeugteils mit einem Elektromotor und einem Planetengetriebe in einem Gehäuse, wobei der Eintrieb des Elektromotors in das Sonnenrad des Planetengetriebes erfolgt, wobei die erste Abtriebswelle über ein erstes Element des Planetengetriebes angebunden ist, und die zweite Abtriebswelle über ein zweites Element des Planetengetriebes umschaltbar zur ersten Abtriebswelle und konzentrisch zur ersten Abtriebswelle angeordnet ist.

Durch die konzentrische Anordnung ist eine hohe Packungsdichte der beiden Abtriebswellen umsetzbar und die elektrische Antriebsvorrichtung wird in kleinen Bauraum realisierbar. Die Abtriebswellen sind umschaltbar ausgelegt, sodass entweder die erste Abtriebswelle oder die zweite Abtriebswelle aktiviert ist, was zu einen Kraftfluss über die jeweils aktivierte Ausgangswelle führt.

Die erfindungsgemäße Umsetzung erfolgt, indem die erste Abtriebswelle über einen Planetenträger und die zweite Abtriebswelle über ein Hohlrad am Planetengetriebe angebunden sind.

In der Umsetzung ist das Hohlrad konzentrisch zum Planetenträger aus dem Gehäuse des elektrischen Antriebs geführt.

Das Konzept erlaubt es, dass die jeweiligen Abtriebswellen über ein Zahnrad oder einen Mitnehmer umgesetzt sind. Gerade in Anwendungsfällen, in dem der elektrische Antrieb nicht kontinuierlich eine Welle antreiben muss, sondern nur eine Drehbewegung entlang eines Teilkreises des gesamten Drehbereichs realisiert ist, ist die Verwendung von Mitnehmern sinnvoll. Damit können über kleine Winkelbereiche der Drehung Lenker oder Klinken bewegt werden.

Zur Umsetzung der beiden alternativen Kraftflüsse über die beiden Abtriebswellen weisen der Planetenträger und das Hohlrad erfindungsgemäß jeweils Mittel auf, die zu Verblockung des Planetenträgers oder des Hohlrad dienen.

Dabei weist der Planetenträger eine Schaltscheibe auf, die drehfest mit dem Planetenträger verbunden ist. Der Planetenträger kann noch einteilig mit einer Schaltvorrichtung ausgeführt sein, die ein Blockieren des Planetenträgers erlaubt.

In einer vorteilhaften Ausführungsform bestehen die Mittel zur Verblockung aus Nuten, in die mindestens ein Sperrelement eingreift.

Je nachdem, wie die Nuten eingebracht sind, werden unterschiedliche Sperrelemente verwendet.

Es ist dabei von Vorteil, dass die Nuten auf den Außenumfängen der Schaltscheibe sowie des Hohlrad axial parallel zueinander angebracht sind, sodass ein Sperrelement durch eine Verschiebung entlang der Drehachse entweder Hohlrad oder Planetenträger blockiert.

In dieser Ausführungsform wird ein einziges Sperrelement verwendet, und axial bewegt.

### Beispiel der Erfindung

Die Erfindung wird in den Figuren dargestellt und in der nachfolgenden Beschreibung ausgeführt.
Figur 1 zeigt einen elektrische Antriebsvorrichtung im Stand der Technik,
Figur 2 zeigt ein Detail der erfindungsgemäßen Lösung,
Figur 3 zeigt eine Explosionszeichnung der Erfindung,
Figur 4 zeigt ein Detail,
Figur 5 und 6 zeigt eine Sperrvorrichtung,
Figur 7 eine Ansicht auf die elektrische Antriebsvorrichtung im Bereich der Abtriebswellen.

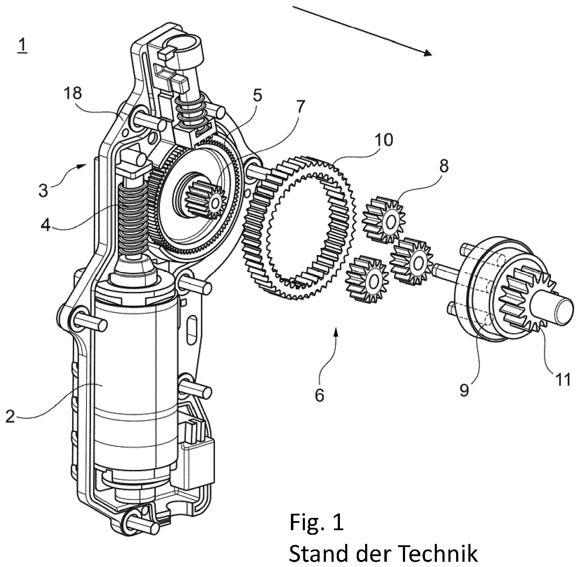

Figur 1 zeigt beispielhaft eine elektrische Antriebsvorrichtung 1, deren Gehäuse entfernt wurde. Eine solche elektrische Antriebsvorrichtung 1 weist eine einzige Abtriebswelle auf und wird beispielsweise zum Antrieb einer Dachkinemathek eines Faltdaches, eines Heckklappendeckels, eines Spannbügels, eines Schiebedachs, eines Rollos usw. verwendet.

Die elektrische Antriebsvorrichtung 1 wird von einem Elektromotor 2 angetrieben, der eine Schneckenwelle 4 in Drehung versetzt. Der Elektromotor 2 ist in einem Gehäuse 18 verbaut, das auch den Schneckenantrieb 3 beinhaltet. In der Darstellung der Figur 1 fehlt dabei die Gehäuseabdeckung, die den kompletten elektrischen Antrieb 1 verschließt. Der Schneckenantrieb 3 besteht aus einem Schneckenrad 5, in das die Schneckenwelle 4 eingreift. In diesem Ausführungsbeispiel wird über ein Sonnenrad 7 ein Planetengetriebe 6 angetrieben. Das Planetengetriebe 6 besteht aus einem Hohlrad 10, einem Planetenträger 9, auf dem Planetenräder 8 angeordnet sind sowie einem ersten Abtrieb, in Form einer ersten Abtriebswelle 11. In diesem Ausführungsbeispiel ist die erste Abtriebswelle 11 mit dem Planetenträger 9 verbunden. Das in diesem Beispiel sichtbare Hohlrad 10 weist zudem eine Außenverzahnung auf, um gegebenenfalls das Hohlrad freizugeben und eine Betätigung des Planetenträgers bei blockiertem Motor zu gewährleisten, um eventuell über eine weitere Anbindung eines nicht gezeigten Zahnrades, wie im Stand der Technik ausgeführt, einen weiteren Kraftfluss mit einer zweiten Abtriebswelle, die versetzt zu der ersten Abtriebswelle angeordnet wäre, zu realisieren.

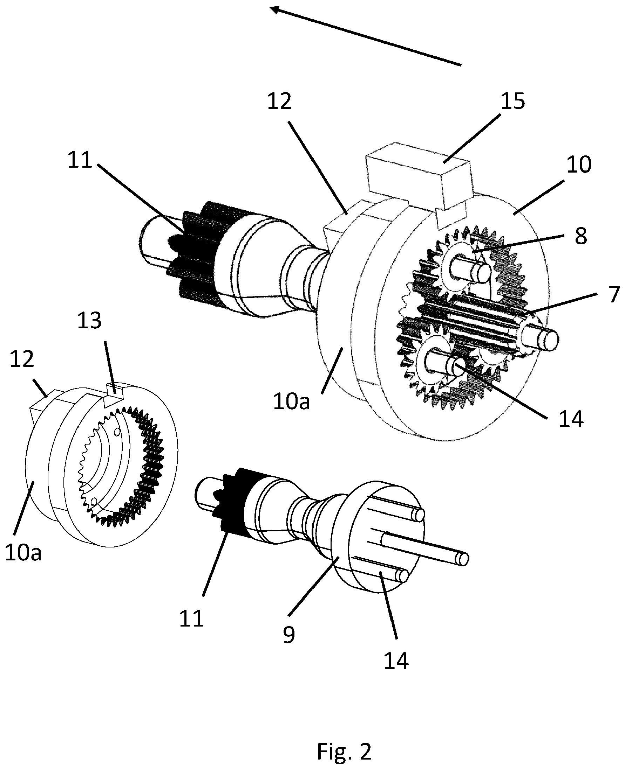

Der erfindungsgemäße elektrische Antrieb 1 wird in den folgenden Figuren 2 bis 7 im Einzelnen dargestellt.

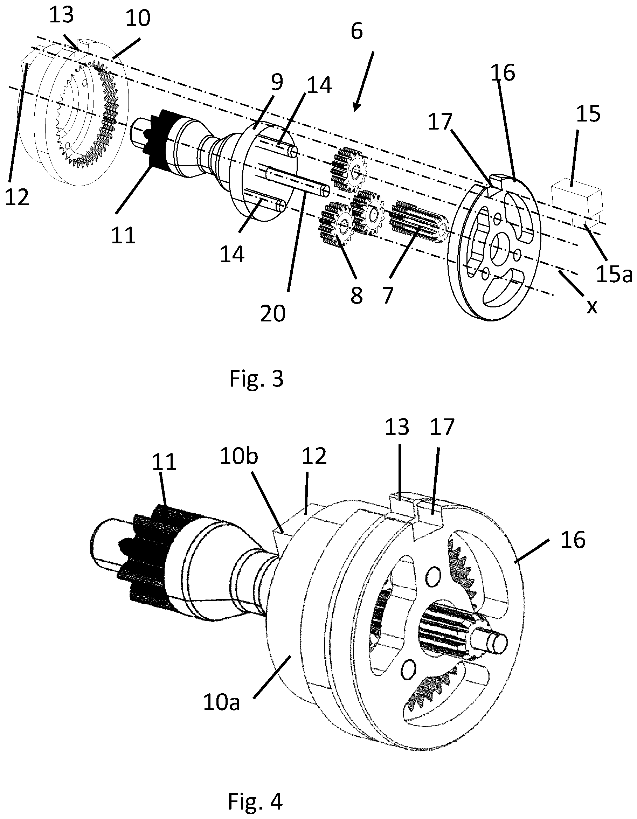

Figur 3 zeigt in einer Explosionsdarstellung die einzelnen Bauteile der erfindungsgemäßen Antriebsvorrichtung, wobei der Elektromotor 2 selbst, sowie der Schneckenantrieb 3 im Gehäuse 18 nicht ausgeführt sind. Die Explosionszeichnung zeigt somit den Aufbau des Planetengetriebes 6, wobei der Schneckenantrieb 3 auf der rechten Seite der Darstellung angekoppelt ist. Zwischen dem Schneckenantrieb 3 und dem Planetengetriebe 6 ist in der erfindungsgemäßen Anordnung eine Schaltscheibe 16 zu erkennen. Diese Schaltscheibe weist Öffnungen für das Sonnenrad 7 sowie Aufnahmen für die Achsen 14 der Planetenräder auf. Zudem ist auf der Oberseite, auf dem Außenradius der Schaltscheibe 16 eine Nut 17 eingearbeitet, die in diesem Ausführungsbeispiel als einfache Ausnehmung ausgebildet ist. Die Schaltscheibe 16 ist drehfest mit dem Planetenträger 9 verbunden.

Der Planetenträger 9 weist zudem eine Durchführung für die Achse 20 des Sonnenrad 7 auf. Der Planetenträger 9 erstreckt sich in einer Längsachse entlang der Achse 20 und endet mit der ersten Abtriebswelle 11. Im Ausführungsbeispiel der Figuren 2-6 ist die erste Abtriebswelle 11 in Form eines Außenzahnrades dargestellt. Das Hohlrad 10 des Planetengetriebes 6 weist eine Innenverzahnung auf, sowie einen Lagerbereich 10a, der auf dem Planetenträger 9a drehbar gelagert ist.

Des Weiteren weist das Hohlrad eine zweiten Abtriebsmöglichkeit auf. Die zweite Abtriebswellle12 ragt aus dem Gehäuse heraus und ist in Form eines Riegels oder Nockens oder auch eines Zahnrades mit Innen- oder Außenverzahnung ausgeführt.

Im Beispiel der Figuren ist lediglich ein Riegel dargestellt, der sich entlang des Durchmessers des Hohlrad 10 erstreckt und in der Mitte eine Durchführung aufweist, durch die die erste Abtriebswelle 11 geführt wird.

Das Hohlrad 10 besitzt des Weiteren, wie die Schaltscheibe 16, eine Nut 13, die am Außenumfang des Hohlrad 10 angebracht ist. In der Figur 4 ist beispielhaft der Zusammenbau des Planetengetriebe 6 dargestellt. In diesem Ausführungsbeispiel sind die Nuten 17 sowie 13 der Schaltscheibe und des Hohlrad beispielsweise axial an derselben Position angeordnet. Der Kraftfluss des Planetengetriebes erfolgt über die beiden Abtriebswellen 11 und 12, also koaxial zur Drehachse x des Planetengetriebes, wobei die zweite Abtriebswelle 12 die erste Abtriebswelle 11 umfasst.

Mit dieser Ausführungsform ist ein Kraftfluss über zwei Komponenten des Planetengetriebes realisiert, wobei beide Abtriebswellen koaxial zur Drehachse x liegen und konzentrisch dazu aufgebaut sind.

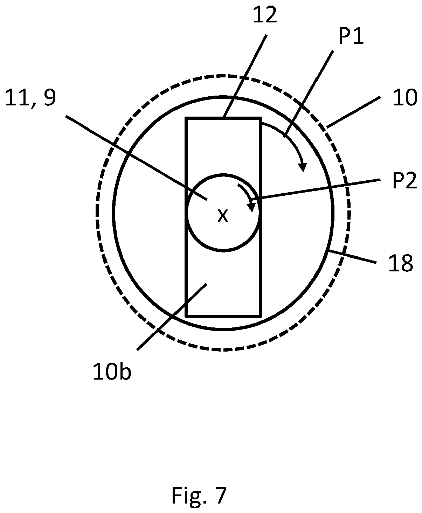

In Figur 7 ist schematisch ein Blick auf den Bereich des elektrischen Antriebs 1 zu sehen, in dem die beiden Abtriebswellen 11 und 12 der elektrischen Antriebsvorrichtung aus dem Gehäuse 18 nach außen geführt werden. Das Gehäuse ist nur schematisch mit dem Bezugszeichen 18 dargestellt. Das weitere Gehäuse beinhaltet natürlich den Elektromotor 2 sowie den Schneckenantrieb 4 und das Planetengetriebe 6, was die Zeichnung aber nicht zeigt. In der Aufsicht auf die Oberfläche des Gehäuses 18 ist der Teil des Hohlrads 10 zu erkennen, der nach außen geführt ist. Dieser Teil folgt auf den Lagerbereich 10a des Hohlrad 10 und ist in seinem Durchmesser gegenüber dem Lagerbereich 10a reduziert.

In diesem Beispiel befindet sich auf der Oberfläche des Hohlrad eine riegelartige Struktur 10b, die sich mit dem Hohlrad 10 dreht, was mit dem Pfeil P1 angedeutet ist. In diesem Ausführungsbeispiel kann auf der riegelartigen Struktur 10b ein Lenker aufgebracht sein, der nur entlang eines bestimmten Kreisabschnittes des Drehumfangs gedreht wird. Soll die zweite Abtriebswelle 12 dagegen komplette Drehungen durchführen, ist es sinnvoll ein Zahnrad auf der Oberfläche des Hohlrad 10 aufzubringen und die riegelartige Struktur 10b dadurch zu ersetzen. Die erste Abtriebswelle 11 wird durch die zentrale Öffnung des Hohlrads 10 geführt und kann ebenfalls mit einem Zahnrad versehen sein oder über eine riegelartige Struktur oder Nocken mit einem Lenker oder einer Klinke verbunden werden. Die erste Abtriebswelle 11 dreht sich dabei entlang des Pfeils P2.

Die riegelartige Struktur 10b des Ausführungsbeispiels ist dabei nur eine mögliche Form eines Mitnehmers, der eine formschlüssige Verbindung mit der zu betreibenden Komponente im Fahrzeug herstellt.

Um die beiden Abtriebswellen für den Kraftfluss durch das Planetengetriebe zu betätigen, müssen im Wechsel das Hohlrad 10 bzw. der Planetenträger 9 blockiert werden.

Die Übersetzung der beiden Abtriebswellen 11 und 12 unterscheidet sich dabei nicht sehr. Die Übersetzungen unterscheiden sich bei Planetengetrieben bauartbedingt an dieser Stelle um 1.

Um das Hohlrad 10 und dem Planetenträger 9 zu blockieren und freizugeben wird eine Schalteinrichtung verwendet, die ein Sperrelement 15 aufweist. Das Sperrelement 15 besteht in diesem Ausführungsbeispiel aus einem Block, der einen gestuften Bereich 15a aufweist.

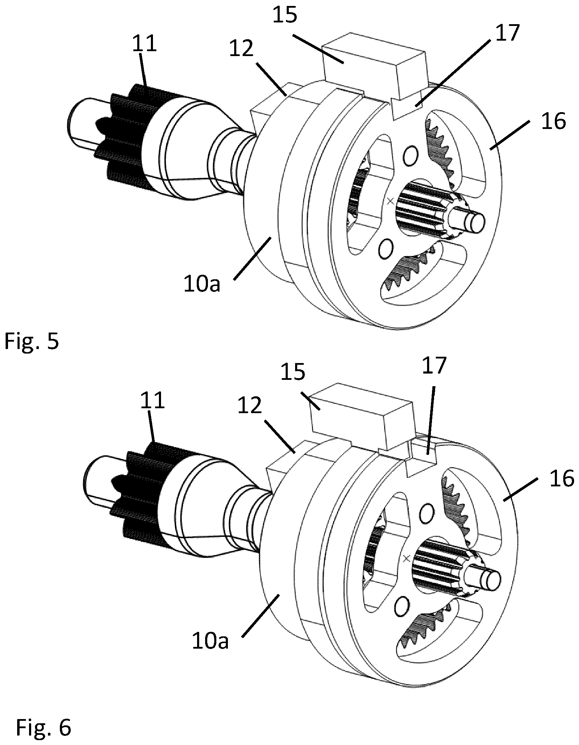

Das Sperrelement 15 wird über einen Aktuator verschoben, und greift mit seinem gestuften Bereich 15a entweder in die Nut 17 der Schaltscheibe 16 ein oder in die Nut 13 des Hohlrad 10. Im ersten Fall, in Figur 5 dargestellt, wird der Planetenträger 9 blockiert und der Kraftfluss erfolgt über das Hohlrad 10 und die zweite Abtriebswelle 12. Wird das Hohlrad 10 blockiert, was der Darstellung in Figur 6 entspricht, erfolgt der Kraftfluss über die erste Abtriebswelle 11.

Die Verwendung eines Sperrelements 15 ist dabei durchaus vorteilhaft, allerdings sind auch Ausführungsformen denkbar, in denen zwei Sperrelemente verwendet werden, um die Schaltscheibe und den Planetenträger 9 oder das Hohlrad 10 zu verblocken. Die Verwendung von mehreren Sperrelementen ist notwendig, wenn die Sperrpunkte der beiden Bauteile, Schaltscheibe 16 und Hohlrad 10, nicht an derselben Stelle des Außenumfangs oder gar nicht am Außenumfang angeordnet sind.

Die Schalteinrichtung, also die Kombination von Sperrelementen und Gegenelementen auf den Bauteilen des Planetengetriebes kann auch über weitere alternative Ausführungen, die dem Fachmann gebräuchlich sind, realisiert sein.

Die erfindungsgemäße elektrische Antriebsvorrichtung 1 wird für ein bewegliches Fahrzeugteil die Kombination von unterschiedlichen Bewegungsaufgaben in einem Fahrzeug eingesetzt. Als Beispiel kann man ein Faltverdeck mit Spannbügel betrachten, wobei eine Abtriebswelle für die Bewegung der Hauptkinemathek des Faltverdecks eingesetzt ist und die weitere Abtriebswelle die Bewegung des Spannbügels betätigt.

Auch eine Bewegung eines Faltverdecks und die Bewegung des Verdeckkastendeckels lässt sich mit der elektrischen Antriebsvorrichtung umsetzen. Es ist auch denkbar ein Schiebedach sowie eine Abschattung des Schiebedachs mit einer solchen elektrischen Antriebsvorrichtung zu betreiben.

### Bezugszeichen

1 Elektrische Antriebsvorrichtung
2 Elektromotor
3 Schneckenantrieb
4 Schneckenwelle
5 Schneckenrad
6 Planetengetriebe
7 Sonnenrad
8 Planetenräder
9 Planetenträger
10 Hohlrad
10a Lagerbereich
10b riegelartige Struktur
11 erste Abtriebswelle
12 zweite Abtriebswelle
13 Nut Hohlrad
14 Achse des Planeten
15 Sperrelement
15a gestufter Bereich
16 Schaltscheibe
17 Nut Schaltscheibe
18 Gehäuse
19 Aufnahme
20 Achse

## Patentansprüche

1. Elektrische Antriebsvorrichtung (1) eines beweglichen Fahrzeugteils, mit einem Elektromotor (2) und einem Planetengetriebe (6) in einem Gehäuse (18), wobei der Eintrieb des Elektromotors (2) in das Sonnenrad (7) des Planetengetriebes (6) erfolgt, wobei die erste Abtriebswelle (11) mit einem ersten Element des Planetengetriebes verbunden ist, **dadurch gekennzeichnet, dass** eine zweite Abtriebswelle (12) über ein zweites Element des Planetengetriebes (6) umschaltbar zur ersten Abtriebswelle (11) und konzentrisch zur ersten Abtriebswelle (11) angeordnet ist, wobei die erste Abtriebswelle (11) mit einem Planetenträger (9) und die zweite Abtriebswelle (12) mit einem Hohlrad (10) verbunden ist und der Planetenträger (9) und das Hohlrad (10) jeweils Mittel aufweisen, die zur Verblockung des Planetenträgers (9) oder des Hohlrad (10) am Gehäuse (18) dienen.

2. Elektrische Antriebsvorrichtung (1) nach Anspruch 1, **dadurch gekennzeichnet, dass** das Hohlrad (10) konzentrisch zum Planetenträger (9) aus dem Gehäuse der elektrischen Antriebsvorrichtung geführt ist.

3. Elektrische Antriebsvorrichtung (1) nach einem der Ansprüche 1 oder 2, **dadurch gekennzeichnet, dass** die Abtriebswellen (11,12) ein Zahnrad oder einen Mitnehmer tragen.

4. Elektrische Antriebsvorrichtung (1) nach Anspruch 1, **dadurch gekennzeichnet, dass** der Planetenträger (9) eine Schaltscheibe (16) aufweist, die drehfest mit dem Planetenträger (9) verbunden ist.

5. Elektrische Antriebsvorrichtung (1) nach einem der vorhergehenden Ansprüche, **dadurch gekennzeichnet, dass** die Mittel zur Verblockung aus Nuten (17,13) bestehen, in die mindestens ein Sperrelement (15) eingreift.

6. Elektrische Antriebsvorrichtung (1)) nach Anspruch 5, **dadurch gekennzeichnet, dass** die Nuten (13,17) auf den Außenumfängen der Schaltscheibe (16) sowie des Hohlrad (10) axial parallel zueinander angebracht sind, sodass ein Sperrelement (15) durch eine Verschiebung entlang der Drehachse (x) entweder das Hohlrad (10) oder den Planetenträger (9) blockiert.

7. Fahrzeug mit einem beweglichen Fahrzeugteil insbesondere einer Dachanordnung mit mindestens einer elektrischen Antriebsvorrichtung (1) nach den vorhergehenden Ansprüchen.

## Claims

1. Electric drive device (1) of a movable vehicle part, having an electric motor (2) and a planetary gearbox (6) in a housing (18), wherein the drive input of the electric motor (2) is introduced into the sun gear (7) of the planetary gearbox (6), wherein the first output shaft (11) is connected to a first element of the planetary gearbox, **characterized in that** a second output shaft (12) by way of a second element of the planetary gearbox (6) is disposed so as to be able to be shifted in relation to the first output shaft (11) and so as to be concentric with the first output shaft (11), wherein the first output shaft (11) is connected to a planet carrier (9), and the second output shaft (12) is connected to a ring gear (10), and the planet carrier (9) and the ring gear (10) each have means which serve for blocking the planet carrier (9) or the ring gear (10) on the housing (18).

2. Electric drive device (1) according to Claim 1, **characterized in that** the ring gear (10) leads out of the housing of the electric drive device so as to be concentric with the planet carrier (9).

3. Electric drive device (1) according to one of Claims 1 or 2, **characterized in that** the output shafts (11, 12) support a gear wheel or a driving dog.

4. Electric drive device (1) according to Claim 1, **characterized in that** the planet carrier (9) has a shifting disc (16) which is connected in a rotationally fixed manner to the planet carrier (9).

5. Electric drive device (1) according to one of the preceding claims, **characterized in that** the means for blocking are composed of grooves (17, 13), at least one locking element (15) engaging in said grooves (17, 13).

6. Electric drive device (1) according to Claim 5, **characterized in that** the grooves (13, 17) in axial terms are attached to the external circumferences of the shifting disc (16) and of the ring gear (10) so as to be mutually parallel such that a locking element (15), by being displaced along the rotation axis (x), blocks either the ring gear (10) or the planet carrier (9).

7. Vehicle having a movable vehicle part, in particular a roof assembly, having at least one electric drive device (1) according to one of the preceding claims.

## Revendications

1. Dispositif d'entraînement électrique (1) d'une pièce de véhicule mobile, comprenant un moteur électrique (2) et un engrenage planétaire (6) dans un carter (18), l'entraînement d'entrée du moteur électrique (2) étant effectué dans la roue solaire (7) de l'engrenage planétaire (6), le premier arbre de sortie (11) étant relié à un premier élément de l'engrenage planétaire, **caractérisé en ce qu'**un deuxième arbre de sortie (12) est disposé de manière à pouvoir être commuté par un deuxième élément de l'engrenage planétaire (6) par rapport au premier arbre de sortie (11) et disposé de manière concentrique par rapport au premier arbre de sortie (11), le premier arbre de sortie (11) étant relié à un porte-satellites (9), et le deuxième arbre de sortie (12) étant relié à une couronne (10), et le porte-satellites (9) et la couronne (10) présentant respectivement des moyens qui servent au blocage du porte-satellites (9) ou de la couronne (10) sur le carter (18).

2. Dispositif d'entraînement électrique (1) selon la revendication 1, **caractérisé en ce que** la couronne (10) sort du carter du dispositif d'entraînement électrique de manière concentrique par rapport au porte-satellites (9).

3. Dispositif d'entraînement électrique (1) selon l'une quelconque des revendications 1 et 2, **caractérisé en ce que** les arbres de sortie (11, 12) portent une roue dentée ou un tenon d'entraînement.

4. Dispositif d'entraînement électrique (1) selon la revendication 1, **caractérisé en ce que** le porte-satellites (9) présente une rondelle de commutation (16) qui est reliée au porte-satellites (9) de manière verrouillée en rotation.

5. Dispositif d'entraînement électrique (1) selon l'une quelconque des revendications précédentes, **caractérisé en ce que** les moyens de blocage sont composés de rainures (17, 13) dans lesquelles vient s'engager au moins un élément de verrouillage (15).

6. Dispositif d'entraînement électrique (1) selon la revendication 5, **caractérisé en ce que** les rainures (13, 17) sont installées sur les circonférences extérieures de la rondelle de commutation (16) ainsi que de la couronne (10) axialement en parallèle les unes aux autres de sorte qu'un élément de verrouillage (15) bloque soit la couronne (10), soit le porte-satellites (9) par un décalage le long de l'axe de rotation (x).

7. Véhicule, comprenant une pièce de véhicule mobile, en particulier d'un agencement de toit muni d'au moins un dispositif d'entraînement électrique (1) selon les revendications précédentes.
